# EUROPÄISCHE PATENTSCHRIFT

(11) **EP 0 527 794 B1**
(45) Veröffentlichungstag und Bekanntmachung des Hinweises auf die Patenterteilung: **24.08.1994**
(21) Anmeldenummer: 91908228.9
(22) Anmeldetag: 03.05.1991
(51) Int. Cl.: C01G 37/08

(54) **VERFAHREN ZUR REGELUNG DES DURCHSATZES BEI DER ELEKTROCHEMISCHEN REGENERATION VON CHROMSCHWEFELSÄURE**
PROCESS FOR REGULATING THE FLOW RATE IN THE ELECTROCHEMICAL REGENERATION OF CHROMIC-SULPHURIC ACID
PROCEDE POUR LE REGLAGE DU DEBIT LORS DE LA REGENERATION ELECTROCHIMIQUE D'ACIDE SULFO-CHROMIQUE

(30) Priorität: 05.05.1990 DE 4014429
(43) Veröffentlichungstag der Anmeldung: 24.02.1993
(73) Patentinhaber: HOECHST AKTIENGESELLSCHAFT, 65926 Frankfurt am Main (DE)
(72) Erfinder: STENZEL, Jürgen, D-8906 Gersthofen (DE); HERBST, Hans, D-8901 Meitingen (DE)
(86) Internationale Anmeldenummer: EP9100842
(87) Internationale Veröffentlichungsnummer: WO9117117

(56) Entgegenhaltungen:
- DE-C- 1 804 956
- Chemical Abstracts, vol. 84, No. 10, 8 March 1976, page 513, abstract No.66896n, (Columbus, Ohio, US), E.S. Letskikh et al.: "Electrochemical regeneration of chromium sulfate waste during oxidation (purification) ofmineral wax", & Khim. Tverd. Topl. (Moscow) 1975, (6), 110-15 see abstract
- Chemical Abstracts, vol. 87, No. 26, 26 December 1977, page 450, abstract No.208652t, Columbus, Ohio, US; & SU A 574 482 (E.S. Letskikh et al.) 30.09.1977

## Beschreibung

Die Erfindung bezieht sich auf ein Verfahren zur Regelung des Durchsatzes bei der elektrochemischen Regeneration von Chromschwefelsäure durch die Dosierung von heißer schwefelsaurer Chrom-III-sulfatlösung in kontinuierlich betriebene Durchflußelektrolysezellen.

Bekannt ist, die heiße Lösung in hoch angebrachte Vorratsgefäße zu fördern und aus diesen Vorratsgefäßen mittels Heber aus Glas und langen Schlauchleitungen den Elektrolyt den einzelnen Zellkaskaden zuzuführen. (vgl. M. Käppel, Elektrolytische Regeneration von Chromsäure, Chem. Ing. Technik 35 (1963), 386 - 389). Diese Heber sind U-förmig gebogene Glasrohre mit einem verlängerten Schenkel, welcher mit einer kapillarförmigen Verjüngung des Glasrohrdurchmessers endet. Die durchfließende Flüssigkeitsmenge ist abhängig von der Höhendifferenz zwischen dem Flüssigkeitsstand in den Vorratsgefäßen und dem Ende des längeren Schenkels des Glashebers sowie dem Durchmesser der Kapillare. Soll die Flüssigkeitsmenge verändert werden, müssen die Glasheber durch andere mit größerem Kapillardurchmesser (für mehr Flüssigkeitsdurchtritt) oder kleinerem Kapillardurchmesser (für weniger Flüssigkeitsdurchtritt) ersetzt werden.

Diese Art der Dosierung hat eine Reihe von Nachteilen:
1. Die Vorratsgefäße mit der heißen, schwefelsauren Chrom-III-sulfatlösung stellen im Fall von Leckagen ein Unfallrisiko dar.
2. Die schwefelsaure Chrom-III-sulfatlösung muß über lange Schlauchleitungen zu den Elektrolysezellen geleitet werden. Wegen mitgerissener Luft und sich entwickelnder Gase müssen die Schlauchleitungen in geeigneter Weise entgast werden. Außerdem können die Gase zum Abreißen der Flüssigkeitssäule im Glasheber führen:
3. Bei Änderung der zur Verfügung stehenden Strommenge muß die durchzusetzende Elektrolytmenge durch Auswechseln der Glasheber angepaßt werden. Das erfordert einige Zeit und führt zu Mängeln in der Qualität der regenerierten Chromschwefelsäure.
4. Die heiße, von der Montanwachsbleichung kommende schwefelsaure Chrom-III-sulfatlösung enthält häufig Spuren von nicht abgetrenntem Wachs. Da die Arbeitstemperatur der elektrochemischen Regeneration (weniger als 100°C) unterhalb des Schmelzpunktes des Wachses liegt, kann sich in den Glashebern und insbesondere in den Kapillaren der Glasheber Wachs absetzen. Dadurch verändert sich der Durchmesser der Glasrohre und die durchfließende Flüssigkeitsmenge und damit die Qualität des Endproduktes (ständige Konzentrationsänderungen).

Weiterhin ist ein Verfahren zur elektrolytischen Regenerierung von reduzierten Chromverbindungen bekannt, bei welchem die Lösung der zu regenerierenden Chromverbindung kontinuierlich in den Kathodenraum einer elektrolytischen Zelle mit einem porösen Polytetrahalogenäthylen-Diaphragma eingebracht und durch mindestens eine Öffnung im Diaphragma in den Anodenraum geleitet wird und nach der anodischen Oxidation der Chromverbindung die regenerierte Lösung aus dem Anodenraum der Zelle entnommen wird (vgl. DE-A-1804956). Das Verfahren arbeitet praktisch drucklos.

Es bestand die Aufgabe, ein Verfahren zu finden, welches die vorstehenden Mängel nicht aufweist.

Gefunden wurde, daß die Aufgabe gelöst werden kann, wenn die schwefelsaure Chrom-III-sulfatlösung unter Druck eingespeist wird, wobei die eingespeiste Elektrolytmenge durch beeinflussende Regelung die Erzeugung einer gleichmäßigen Produktqualität ermöglicht.

Die Erfindung betrifft somit ein Verfahren zur Regelung des Durchsatzes bei der elektrochemischen Regeneration von Chromschwefelsäure durch kontinuierliche Zuführung von schwefelsaurer Chrom-III-sulfatlösung zu den Elektrolysezellen, das dadurch gekennzeichnet ist, daß die schwefelsaure Chrom-III-sulfatlösung in einem geschlossenen Rohrnetz unter Druck gehalten und durch austauschbare Blenden in den Zellzuführungen in die Anodenkammer der jeweils ersten Zelle einer Zellenkaskade eingeleitet wird, wobei die in die Zellen eingespeiste Elektrolytmenge über den Druck im Rohrnetz und den Durchmesser der Öffnung in den Blenden gesteuert wird und der Stand im Säuresammelbehälter als Regelgröße für den Vordruck der Elektrolyteinspeisung dient.

Das erfindungsgemäße Verfahren wird vorzugsweise bei der Regeneration von Chromschwefelsäure, welche für die Bleichung von Rohmontanwachs eingesetzt wurde, angewendet. Diese Regeneration ist seit vielen Jahren bekannt.

Bei der Montanwachsveredelung wird geschmolzenes Rohmontanwachs mit heißer Chromschwefelsäure kontinuierlich im Gleichstrom intensiv kontaktiert. Dabei werden von dem kräftigen Oxidationsmittel Chromschwefelsäure die Dunkelstoffe im Wachs oxidativ zerstört; das Wachs wird gebleicht. Bei der Oxidation der organischen Dunkelstoffe im Rohmontanwachs mit dem Chromtrioxid der Chromschwefelsäure wird das sechswertige Chrom zu dreiwertigem Chrom reduziert. Zum Betreiben der kontinuierlichen Montanwachsbleichung wird Chromschwefelsäure gleichbleibender Qualität (Menge, Konzentration, Temperatur) gefordert.

Die heiße schwefelsaure Chrom-III-sulfatlösung wird nach Ersatz von verdampftem Wasser in ein Puffergefäß überführt, aus welchem sie kontinuierlich entnommen und in ein chemisch widerstandsfähiges, geschlossenes Rohrnetz aus Stahl/PTFE gepumpt wird. In dem Rohrnetz wird ein konstanter einstellbarer Druck von 0,1 bis 5, vorzugsweise 0,7 bis 1,5 bar aufrechterhalten. Aus diesem Rohrnetz wird die schwefelsaure Chrom-III-sulfatlösung über kurze, elektrische nicht leitende, chemisch widerstandsfähige Kunststoffzuführungen (vorzugsweise aus PVDF) durch austauschbare Blenden aus Zirkonmetall in die Anodenkammer der jeweils ersten Zelle einer Zellenkaskade eingeleitet. Der Durchmesser der Öffnung in den Zirkonblenden beträgt 0,1 bis 15,0 mm, vorzugsweise 3 bis 6 mm. Die eingespeiste Elektrolytmenge ist abhängig vom Druck im Rohrnetz und dem Durchmesser der Öffnung in den Zirkonblenden.

Konzentration und Menge der erzeugten Chromschwefelsäure werden am Auslauf der Kaskade bestimmt.

Verfahrensmäßig wird der Stand im Säuresammelbehälter als Regelgröße für den Vordruck der Elektrolyteinspeisung gewählt. Bei Normalbetrieb bleibt der Stand konstant, weil die zulaufende Säuremenge aus den Kaskadenausläufen und die aus dem Säuresammelbehälter an den Montanwachsbetrieb abgegebene Menge gleich sind. Bei Störungen oder gewollten Änderungen wird sich der Stand im Säuresammelbehälter bei unveränderter Abgabe an den Wachsbetrieb durch mehr oder weniger zulaufende Säuremengen ändern. Ein veränderter Stand im Säuresammelgefäß wirkt als Regelgröße auf den Druck der Elektrolytdruckeinspeisung (z.B. niedriger Stand → höherer Druck der Elektrolyt-Druckeinspeisung).

Das erfindungsgemäße Verfahren bringt eine Reihe von Vorteilen, indem
1. das Rohrleitungsnetz außerhalb der Arbeitsplätze, nämlich unterhalb der Elektrolysezellensaalbühne verlegt ist;
2. die Einleitung des Elektrolyten blasenfrei in die Flüssigkeit der Elektrolysezelle erfolgt; es kommt nicht mehr zu Emissionen in dem Arbeitsraum;
3. der unter Druck befindliche Elektrolyt mit hoher Geschwindigkeit (turbulent) durch die Öffnung in der Zirkonblende tritt. Das Zuwachsen dieser Öffnung durch festwerdendes Wachs findet kaum mehr statt (im Gegensatz dazu verwachste die Kapillare des Glashebers, durch dessen Öffnung die Flüssigkeit vergleichsweise langsam hindurchfloß (laminar)).
4. die geringeren Schwankungen der in die Kaskaden eingespeisten Elektrolytmengen sich bei konstanter Elektrolysestrommenge als geringe Konzentrationsschwankungen im Endprodukt auswirken.

Außerdem ist das erfindungsgemäße Verfahren so anpassungsfähig, daß auch kurzzeitige Strommengenänderungen flexibel aufgefangen werden können, ohne daß die Qualität des Endproduktes beeinflußt wird.

So wird bei plötzlicher Reduzierung der Strommenge auf 50 % der Druck im Rohrnetz um ebenfalls ca. 50 % durch Verstellen der Druckvorwahl in der Meßwarte reduziert (Ansprechzeit ca. 30 Sekunden). Bei Erhöhung der Strommenge erfolgt der gleiche einfache Eingriff in umgekehrter Richtung.

Dadurch kann der Chromsäurebetrieb auf Schwankungen in der Elektrolysestromversorgung flexibel und ohne Qualitätseinbußen reagieren.

Weiterhin gelingt es mit dem erfindungsgemäßen Verfahren auch, systembedingte Schwankungen der Produktmenge aufzufangen, auszugleichen oder zu kompensieren und damit zu gleichmäßigem Produkt und damit besserer Qualität zu kommen. Solche Schwankungen der Menge der am Kaskadenende austretenden Chromschwefelsäure können bedingt sein durch
a) Viskositätsänderungen des Elektrolyten entsprechend den Schwankungen der Dichte,
b) Viskositätsänderungen des Elektrolyten entsprechend den Schwankungen der Elektrolysetemperatur,
c) Verwachsungen der Blendenöffnung der Zirkonblende durch Ablagerungen von Wachs, Harz und/oder Gips,
d) Verstopfungen in den Überläufen von Diaphragmentasche zu Diaphragmentasche innerhalb einer Zelle,
e) Verstopfungen in den Überläufen von Zelle zu Zelle innerhalb einer Kaskade.

Das erfindungsgemäße Verfahren vermag die vorgenannten Störeinflüsse mittels selbstätiger Regelung durch geringfügige Änderungen des Vordrucks in der Elektrolyt-Druckleitung aufzufangen und auszugleichen und Chromschwefelsäure in der gewünschten Menge von gleichmäßiger Qualität zu erzeugen.

### Vergleichsbeispiel A (Normalbetrieb)

Im Zellensaalhochbau waren 108 Glasheber im Betrieb, durch die die Mischsäure in Schläuchen den 54 Kaskaden zugeleitet wurde und jeweils in den Anodenraum der ersten Zelle eingeleitet wurde.

Sämtliche 54 Kaskadenausläufe wurden täglich mindestens einmal analytisch überprüft (Titration).
Konzentrationsspezifikation: 98 g CrO₃/l ± 3 g CrO₃/l
Der Auslauf der letzten der 11 Zellen einer ausgewählten Kaskade zeigte am

| | |
|---|---|
| Mo 8.00 | 100 g CrO₃/l |
| Di 8.00 | 102 g CrO₃/l |
| Mi 8.00 | 97 g CrO₃/l |
| Do 8.00 | 95 g CrO₃/l |
| Fr 8.00 | 92 g CrO₃/l |

Daraufhin erfolgte am Freitag die Anweisung, in dieser Kaskade (11 Zellen á je 20 Diaphragmentaschen) nach einem Fehler zu suchen und den Säureheber zu wechseln.

Ein Fehler konnte nicht ausfindig gemacht werden. Der Glasheber "5,6" (Kapillardurchmesser) wurde gegen einen Glasheber "5,2" ausgewechselt.

| | |
|---|---|
| Sa 8.00 | 96 g CrO₃/l |
| So 8.00 | 97 g CrO₃/l |

In gleicher Weise waren die anderen 53 Kaskaden zu betreuen.

### Vergleichsbeispiel B (Störungsfall)

Im Zellensaalhochbau waren 108 Glasheber im Betrieb.

Aus der Elektrozentrale wurde mitgeteilt, daß der Elektrolysestrom für ca. 3 h um 20 % herabgesetzt werden mußte.

Dem Puffervolumen entsprechend, mußte der Chromsäurebetrieb in 3 h 20 % seiner Leistung zurücknehmen.

In der Meßwarte wurde anhand einer Auslaufkonzentrationsliste und der errechneten Stromminderbeaufschlagung aufgeschrieben, welche Säureheber ausgewechselt werden mußten. Anhand der Liste wurden die Heber ausgetauscht (ca. 30 Heber/h).

In der Meßwarte wurde die Stromaufnahme reduziert.

Nach 3 h wurde der Vorgang in umgekehrter Richtung durchgeführt.

Die an den Wachsbetrieb abgegebene Säure hatte während ca. 2 h in der Menge um ca. 20 % abgenommen und anschließend wieder zugenommen. Ihre Konzentration war im Laufe der folgenden 24 h nach der obigen Störung von 98 g CrO₃/l auf 92 g CrO₃/l abgefallen, auf 102 g CrO₃/l angestiegen und dann bei 97 g CrO₃/l eingependelt.

### Beispiel 1

Die unterhalb des Zellensaals verlegte Elektrolyt-Druckleitung führte durch kurze Stichleitungen zu jedem der 54 Kaskadenanfänge Mischsäure, die in den Anodenraum über Zirkonblenden eingespeist wurden.

Sämtliche Kaskadenausläufe wurden täglich einmal analytisch überprüft (Titrierautomat mit Probenwechsler) Konzentrationsspezifikation (97 g CrO₃/l ± 2 g CrO₃/l)
Der Auslauf einer ausgewählten Kaskade zeigte folgende Titrationsergebnisse

| | |
|---|---|
| Mo 8.00 | 98,1 g CrO₃/l |
| Di 8.00 | 97,6 g CrO₃/l |
| Mi 8.00 | 96,7 g CrO₃/l |
| Do 8.00 | 97,2 g CrO₃/l |
| Fr 8.00 | 97,5 g CrO₃/l |
| Sa 8.00 | 96,8 g CrO₃/l |
| So 8.00 | 96,2 g CrO₃/l |
| Mo 8.00 | 95,9 g CrO₃/l |
| Di 8.00 | 96,3 g CrO₃/l |
| Mi 8.00 | 95,2 g CrO₃/l |
| Do 8.00 | 95,6 g CrO₃/l |
| Fr 8.00 | 94,3 g CrO₃/l |

Daraufhin erfolgte am Freitag die Anweisung, in dieser Kaskade nach einem Fehler zu suchen und gegebenenfalls die Zirkonblende zu wechseln.
Ein Fehler konnte nicht gefunden werden.
Die Zirkonblende "3,8" wurde gegen die Zirkonblende "3,7" ausgetauscht.

Die Ergebnisse der folgenden Zeit waren

| | |
|---|---|
| Sa 8.00 | 96,2 g CrO₃/l |
| So 8.00 | 96,8 g CrO₃/l |
| Mo 8.00 | 96,2 g CrO₃/l |
| Di 8.00 | 96,9 g CrO₃/l |
| Mi 8.00 | 97,8 g CrO₃/l |

### Beispiel 2 (Störungsfall)

Im Zellensaal waren 54 Kaskaden an die Elektrolyt-Druckeinspeisung angeschlossen.

Aus der Elektrozentrale wurde mitgeteilt, daß der Elektrolysestrom für ca. 3 h um 20 % herabgesetzt wird.
1) In der Meßwarte wurde die Stromaufnahme um 20 % zurückgedreht.
2) Ferner wurde der Sollwert der abzugebenden Säuremenge um 20 % reduziert.
3) Außerdem wurde der Sollwert des Drucks der Elektrolyt-Druckeinspeisung um 20 % reduziert.
   Zeitbedarf 1 - 3 Minuten.

Nach 3 h nach Behebung der Fehlerquelle bei der Elektrozentrale wurden die obigen Änderungen wieder rückgängig gemacht.
Zeitbedarf 1 - 3 Minuten.

Die an den Wachsbetrieb abgegebene Menge wurde für 3 h um 20 % reduziert. Die Konzentration der Säure hatte zu keinem Zeitpunkt die Spezifikationsgrenzen 97 g CrO₃/l ± 2 g überschritten.

## Patentansprüche

1. Verfahren zur Regelung des Durchsatzes bei der elektrolytischen Regeneration von Chromschwefelsäure durch kontinuierliche Zuführung von schwefelsaurer Chrom-III-sulfatlösung zu den Elektrolysezellen, dadurch gekennzeichnet, daß die schwefelsaure Chrom-III-sulfatlösung in einem geschlossenen Rohrnetz unter Druck gehalten und durch austauschbare Blenden in den Zellzuführungen in die Anodenkammer der jeweils ersten Zelle einer Zellenkaskade eingeleitet wird, wobei die in die Zellen eingespeiste Elektrolytmenge über den Druck im Rohrnetz und den Durchmesser der Öffnung in den Blenden gesteuert wird und der Stand im Säuresammelbehälter als Regelgröße für den Vordruck der Elektrolyteinspeisung dient.

2. Verfahren nach Anspruch 1, dadurch gekennzeichnet, daß schwefelsaure Chrom-III-sulfatlösung aus der Montanwachsbleichung eingesetzt wird.

3. Verfahren nach Anspruch 1, dadurch gekennzeichnet, daß der Druck 0,1 bis 5,0 bar beträgt.

## Claims

1. A method of regulating the throughput in the electrolytic regeneration of chromosulfuric acid by continuous feeding of chromium(III) sulfate solution containing sulfuric acid to the electrolysis cells, comprising keeping the chromium(III) sulfate solution containing sulfuric acid under pressure in a closed pipe system and introducing it by means of exchangeable orifice plates in the cell feed lines into the anode chamber of the first cell in each case of a cell cascade, the amount of electrolyte fed into the cells being controlled via the pressure in the pipe system and the diameter of the opening in the orifice plates, and the level in the acid collecting container being used as the control variable for the inlet pressure of the electrolyte feed.

2. The method as claimed in claim 1, wherein the chromium(III) sulfate solution containing sulfuric acid from montan wax bleaching is used.

3. The method as claimed in claim 1, wherein the pressure is 0.1 to 5.0 bar.

## Revendications

1. Procédé pour régler le débit lors de la régénération électrolytique d'acide sulfo-chromique au moyen d'un envoi continu d'une solution de sulfate chromique sulfurique aux cellules à électrolyse, caractérisé en ce que le sulfate chromique sulfurique est maintenu sous pression dans un réseau tubulaire fermé et est introduit, grâce à des diaphragmes interchangeables situés dans les canalisations d'amenée aboutissant aux cellules, dans la chambre anodique de la première cellule respective d'une cascade de cellules, la quantité d'électrolyte introduite dans les cellules étant commandée par l'intermédiaire de la pression présente dans le réseau tubulaire et du diamètre de l'ouverture ménagée dans les diaphragmes, et le niveau dans le réservoir d'acide est utilisé comme grandeur de régulation pour la pression amont du système d'alimentation de l'électrolyte.

2. Procédé selon la revendication 1, caractérisé en ce que la solution de sulfate chromique sulfurique est introduite à partir du blanchiment d'une cire minérale.

3. Procédé selon la revendication 1, caractérisé en ce que la pression est comprise est comprise entre 0,1 et 5,0 bars.
